# EUROPEAN PATENT SPECIFICATION

(11) **EP 1 818 595 B1**
(45) Date of publication and mention of the grant of the patent: **29.04.2009**
(21) Application number: 07290148.1
(22) Date of filing: 06.02.2007
(51) Int. Cl.: F16L 59/065

(54) **Method for the manufacture of vacuum insulation products**
Verfahren zur Herstellung von Vakuumisolierungsprodukten
Procédé pour la fabrication de produits d'isolation sous vide

(30) Priority: 09.02.2006 US 772611 P; 02.02.2007 US 670895
(43) Date of publication of application: 15.08.2007
(73) Proprietor: Nanopore, Inc., Albuquerque, NM 87106 (US)
(72) Inventor: Smith, Douglas M., Albuquerque New Mexico 87106 (US); Roderick, Kevin H., Albuquerque New Mexico 87110 (US); Glover, Brian, Albuquerque New Mexico 87106 (US)
(74) Representative: Hirsch & Associés

(56) References cited:
- GB-A- 2 286 234
- US-A- 3 007 596

## Description

### BACKGROUND OF THE INVENTION

### 1. Field of the Invention

The present invention generally relates to methods for producing high-efficiency insulation products using electromagnetic radiation, such as microwave radiation. The methods can result in reduced production time and increased vacuum efficiency for vacuum insulation products.

### 2. Description of Related Art

Thermal insulation can include a porous material with an inherently low thermal conductivity, which serves to protect the system of interest from heat flow in to the system or out to its surroundings. The use of thermal insulation is prevalent in society ranging from use in domestic refrigerators, in shipping containers containing ice or dry ice used for shipment of drugs or food to extend the lifetime of the shipment, and in the tiles on the space shuttle to protect the shuttle from the heat of reentry into the atmosphere.

Most thermal insulation products used today are either fibrous materials, such as fiberglass, mineral wool or asbestos, or polymer foams, such as expanded polystyrene, polyurethane, foamed polyethylene or foamed polypropylene. However, fibrous materials can be undesirable in many instances due to problems related to health and safety. The use of polymer foams may be undesirable due to their flammability, recyclability and release of environmentally unfriendly gases during manufacture, such as fluorocarbons or hydrocarbons. In addition, the thermal conductivity of both fibrous materials and polymer foam materials are on the same order as or greater than stagnant air, which is about 0.026 W/mK at ambient temperature. Because of increased concern with respect to energy efficiency and the environment, there has been much interest in the development of new classes of thermal insulation that have a thermal conductivity much less than that of air, such as aerogels, inert gas-filled panels and vacuum insulation panels.

For thermal insulation, a key measure of performance is the thermal conductivity of the material. The lower the thermal conductivity, the lower the heat flow through the insulation for a given temperature difference. In the absence of convection, heat transfer in insulation occurs due to the sum of three components: solid phase conduction, gas phase conduction and radiation. Solid phase conduction can be minimized by using a low density material such as a material having a high volume fraction of pores, and in this regard most insulation is between 80% and 98% porous. It can also be advantageous to use a solid material that has a low inherent thermal conductivity, such as plastics and some ceramics or glasses.

The relative importance of radiation with respect to heat transfer depends upon the temperature range of interest, and radiation becomes a more prevalent component as the temperature is increased above ambient and/or the magnitude of the other heat transfer modes is minimized. Materials with high infrared extinction coefficients due to absorption, such as carbon black or iron oxide, or due to scattering, such as titania (TiO₂), are often added to high performance insulation.

With control of radiation, suppression of free convection, use of low thermal conductivity materials and a highly porous solid matrix, the thermal conductivity of the insulation approaches that of the gas contained within the pores of the insulation. There are at least two methods of lowering gas phase conduction in insulation. The first is to trap gases in the pores that have lower thermal conductivity than that of air, such as argon, carbon dioxide (CO₂), xenon and krypton. Depending upon the gas employed, the thermal conductivity of insulation filled with an inert gas can range from about 0.009 W/mK to 0.018 W/mK. However, the insulation must be packaged such that the filler gas does not leak from the pores and also so that atmospheric gases do not penetrate the insulation.

The second method for controlling or lowering gas phase conduction is to employ the Knudsen effect. When the mean free path of the gas approaches the pore size of the insulation, the gas phase conductivity is dramatically reduced. When the mean free path of the gas is much larger than the pore size, the gas phase conductivity approaches zero and the total effective thermal conductivity is the sum of only radiation and solid phase conduction. By way of example, the mean free path of air is approximately 60 nanometers at ambient temperature and pressure and the pore/cell size of polymer foams and fibrous materials is typically greater than 10 µm.

There are at least two approaches that can employ the Knudsen effect to lower gas phase conduction. A first approach is to encapsulate the insulation within a barrier material and partially evacuate the gas in the insulation. This increases the mean free path of the gas by lowering the gas density, which lowers gas phase conduction. Materials employing such gas evacuation techniques can achieve a thermal conductivity of less than 0.002 W/mK at ambient temperatures, which is an order of magnitude improvement over conventional insulation.

The advantages of utilizing a vacuum with an insulative material have been known for many years and are the basis of vacuum Dewars that are used with cryogenic liquids and for storing hot or cold beverages or other products. For example, U.S. Patent No. 1,071,817 by Stanley discloses a vacuum bottle or Dewar, where a jar is sealed inside another jar with a deep vacuum maintained in the annular space with the two jars being joined at the jar mouth. Such an approach minimizes joining and thermal bridging problems, but most insulation applications require many different shapes that cannot be met by a Dewar.

Another approach is to use a material with very small pores and a low density. One such class of materials is nanoporous silica, also known as silica aerogel, which generally has small pores of less than about 100 nanometers in size, a low density and a total thermal conductivity at ambient pressure that is lower than that of the gas contained within the pores. It is also known to use nanoporous silica in conjunction with a vacuum to create a vacuum insulation product. For example, U.S. Patent No. 4,159,359 by Pelloux-Gervais discloses the use of compacted silica powders contained in plastic barriers, which are subsequently evacuated. However, it is believed that their commercial use has been limited due to high production costs, including the cost and time associated with drying silica. In such vacuum insulation products, nanoporous metal oxide materials such as silica should be dried to remove adsorbed water before use in a vacuum insulation product.

Various attempts have been made to efficiently dry silica. For example, U.S. Patent No. 4,636,415 by Barito discloses heating silica to temperatures of about 100°C for about 16 hours to drive off adsorbed water on precipitated silica. U.S. Patent No. 5,076,984 by Bisplinghoff et al. discloses heat treating silica powders for two hours at temperatures between 175°C and 300°C using a heated fluidized bed. Bisplinghoff et al. also disclose that after the powders are heated, they must be passed through multiple steps in which the powder cools and can re-adsorb water vapor. However, the processes disclosed by Barito and Bisplinghoff et al. may not be commercially viable due to long processing times and/or energy input. Thus, despite the excellent thermal performance of vacuum insulation products incorporating porous materials such as silica, production costs have limited their use.

U.S. Patent No. 3,007,596 by Matsch discloses insulation having a high resistance to heat transfer. The insulation can include a low-conductive, heat insulating material for reducing the transfer of heat by conduction, and incorporate therein a multiplicity of radiation sheet barriers for reducing the transfer of heat by radiation.

There remains a need for an economical method for the manufacture of high performance insulation products, particularly vacuum insulation products. A reduction in the manufacturing cost would enable the high performance vacuum insulation products to be utilized in a wider range of commercial applications where such use was previously precluded by economic considerations.

### SUMMARY OF THE INVENTION

The present invention provides a method for making vacuum insulation products. According to one embodiment, the method includes providing an insulative mixture comprising an insulative material and a radiation absorbent material, applying electromagnetic radiation to the insulative mixture to at least partially dry the insulative mixture, and sealing the insulative mixture in an enclosure to form the vacuum insulation product.

The insulative mixture can be formed by mixing the insulative material and the radiation absorbent material to form a substantially uniform mixture, such as by blending the materials. According to one embodiment, the radiation absorbent material includes carbon, such as carbon black, and the insulative material includes silica, such as nanoporous silica. The insulative mixture can include at least about 75 wt.% of the insulative material and at least about 1 wt.% of the radiation absorbent material, such as at least about 5 wt.% of the radiation absorbent material.

The insulative mixture can also include a fibrous material such as a fibrous polymer material with the insulative material and the radiation absorbent material to form the insulative mixture. When fibrous materials are utilized, the insulative mixture can include at least about 0.1 wt.% and not greater than about 5 wt.% of the fibrous material. The insulative mixture can also include a scattering material such as titania to scatter infrared (IR) radiation and decrease the thermal conductivity of the vacuum insulation product.

The electromagnetic radiation can have a frequency of from about 0.5 GHz to about 20 GHz. In one embodiment, the radiation is microwave radiation. The electromagnetic radiation can be applied for a period of time sufficient to heat the insulative mixture to a temperature of at least about 50°C. It is an advantage of the present invention that the heating process is rapid and in one embodiment the step of applying the electromagnetic radiation includes applying the radiation for not greater than about 10 minutes per 100 grams of insulative mixture, such as not greater than about 5 minutes per 100 grams of insulative mixture.

To form a vacuum insulation product, the enclosure can be evacuated prior to sealing the enclosure. As a result, the internal pressure within the vacuum insulation product is not greater than about 100 millibars, such as not greater than about 10 millibars. According to one embodiment, the temperature of the insulative mixture during the sealing step is elevated with respect to room temperature, such as a temperature of at least about 50°C.

According to one embodiment, a method for making a vacuum insulation product is provided that includes providing an insulative mixture comprising nanoporous silica and at least about 2 wt.% of a radiation absorbent material, applying microwave radiation to the insulative mixture to at least partially dry the insulative mixture, placing the insulative mixture in an enclosure, evacuating the enclosure, and sealing the insulative mixture in the enclosure to form a vacuum insulation product, where the internal pressure within the vacuum insulation product is not greater than about 100 millibars.

According to another embodiment, a method for producing a vacuum insulation product is provided that includes the steps of heating an insulative mixture, placing the insulative mixture in an enclosure, evacuating the enclosure and sealing the insulative mixture in the enclosure. The insulative mixture has an internal portion and a surface portion and the heating step heats the internal portion of the insulative mixture to a higher temperature than the surface portion of the insulative mixture. After sealing, the vacuum insulation product has an internal pressure of not greater than 100 millibars.

### DESCRIPTION OF THE INVENTION

In view of the foregoing, one objective of the present invention is to decrease production costs associated with the production of vacuum insulation products. More particularly, an objective of the present invention is to decrease the amount of time needed to heat and/or dry various vacuum insulation materials.

One or more of the above objectives can be realized by a method of producing a vacuum insulation product, the method generally comprising providing an insulative mixture, applying electromagnetic radiation to the insulative mixture to at least partially dry the mixture, and sealing the insulative mixture in an enclosure. In this regard, it has been unexpectedly discovered that the use of a radiation absorbent material mixed with an insulative material facilitates the use of electromagnetic radiation to rapidly heat and dry the insulative material. Thus, unlike conventional convection drying processes, the application of electromagnetic radiation to a mixture of insulative material and radiation absorbent material can result in rapid and more uniform heating of the insulative material.

As used herein, a vacuum insulation product is a thermal insulation product that comprises a substantially gas-impermeable barrier material defining a substantially gas-impermeable enclosure, where the enclosure includes an insulative material disposed therein. The enclosure is at a pressure that is less than atmospheric pressure. Preferably, the internal pressure within vacuum insulation product according to the present invention is not greater than about 100 millibars, and more preferably is not greater than about 10 millibars and even more preferably is not greater than about 5 millibars. The vacuum insulation product can have a variety of configurations, and in one exemplary embodiment is in the form of a panel having a thickness of at least about ¼ inch (about 6.5 millimeters) and not greater than about 3 inches (about 75 millimeters).

The insulative material can be any material that has a relatively low thermal conductivity. Examples include thermally insulative fibers such as fiberglass; open celled foams such as polyurethane or polystyrene foams, insulative monolithic materials or insulative powder. In a preferred embodiment, the insulative material includes pores sized to facilitate the Knudsen effect, such as pores having a pore size of not greater than about 100 nanometers. The insulative material should also have a relatively low inherent solid-phase thermal conductivity, and in one embodiment the insulative material has a solid-phase thermal conductivity of not greater than about 0.005 W/mK. Preferably, the insulative material is also relatively inexpensive and is lightweight, such as an insulative material having a bulk density in the final vacuum insulation product of not greater than about 0.25 gram/cm³.

In one embodiment, the insulative material is in the form of an insulative powder. For the purpose of illustration, the following description refers to the use of insulative powders to describe the present invention, although insulative monoliths and other forms of similar materials can also be used. Insulative powders useful in accordance with the present invention include metal oxides, particularly silica (SiO₂), aluminosilicates, siliceous minerals such as perlite, and alumina (Al₂O₃), particularly fumed alumina. A particularly preferred insulative powder is a nanoporous metal oxide and particularly silica, such as fumed silica or a silica aerogel. Such materials are available from, for example, Degussa GmbH, Düsseldorf, Germany under the trade name AEROSIL.

The insulative mixture can also include a radiation absorbent material. As used herein, a radiation absorbent material is a material that is adapted to absorb the applied electromagnetic radiation and thereby heat the insulative mixture. The radiation absorbent material should have adequate thermal conductivity for this purpose. That is, absorption of the radiation facilitates heating of the radiation absorbent material, while the thermal conductivity facilitates heating of the insulative material. Radiation absorbent materials that can be useful in accordance with the present invention include forms of carbon, such as carbon black, activated carbon or graphite, silicon carbide or iron oxide. Mixtures of these or other radiation absorbent materials can also be used. According to one preferred embodiment, the absorbent material includes carbon black.

In one embodiment, the radiation absorbent material is also a material that is adapted to block/absorb infrared radiation at the anticipated temperature of use for the insulation product. By blocking/absorbing infrared radiation, the radiation absorbent material reduces infrared radiation transmission through the vacuum insulation product, which further enhances the insulative qualities of the vacuum insulation product. Examples of materials that block/absorb infrared radiation are carbon black and iron oxides.

The insulative material and radiation absorbent material can be mixed in any desired ratio to create the insulative mixture. The insulative mixture preferably includes a sufficient amount of radiation absorbent material dispersed in the insulative material to provide sufficient heat to the insulative material enhance drying of the insulative material. For most applications, the insulative mixture will preferably include at least about 1 wt.% of the radiation absorbent material, more preferably will include at least about 2 wt.% of the radiation absorbent material, even more preferably at least about 5 wt.% of the radiation absorbent material, such as at least about 10 wt.% of the radiation absorbent material. However, to maintain adequate insulative properties, the insulative mixture will preferably include not greater than about 25 wt.% of the radiation absorbent material, such as not greater than about 20 wt.% of the radiation absorbent material. The insulative mixture can preferably include at least about 75 wt.% and more preferably at least about 80 wt.% of the insulative material and will preferably include not greater than about 99 wt.% of the insulative material. One preferred insulative mixture according to the present invention includes at least about 75 wt.% silica and not greater than 25 wt.% carbon black. Such as mixture is anticipated to have a density of between about 0.13 grams/cm³ and 0.25 grams/cm³ (e.g., about 0.16 grams/cm³).

In one embodiment, the insulative mixture can also include a scattering material that is adapted to scatter infrared radiation. The scattering material can advantageously lower the thermal conductivity of the vacuum insulation product by reducing radiation effects from infrared radiation. Suitable scattering materials include, for example, titania (TiO₂). When utilized, the scattering material is preferably not greater than about 30 wt.% of the insulative mixture, but comprises at least about 0.1 wt.% of the insulative mixture. In one example, the insulative mixture can include at least about 10 wt.% of the insulative mixture.

The insulative mixture may also include fibrous material that is adapted to enhance the structural integrity of the vacuum insulation product. For most applications, the insulative mixture will include at least about 0.1 wt.% of the fibrous material, and not greater than about 5 wt.% of the fibrous material. Preferred materials include those that are lightweight, inexpensive and structurally sound, such as polyethylene fibers, polyester fibers and other polymer fibers. Carbon fibers, glass fibers and metal fibers can also be used. Generally, the fibrous material should have a linear density of not greater than about 2 deniers and an average length of at least about 2 millimeters to enhance structural integrity and not greater than about 6 millimeters to facilitate good mixing with the insulative material and radiation absorbent material.

The components of the insulative mixture such as the insulative material, radiation absorbent material, scattering material and fibrous material can be mixed in any known manner to create a homogenous composition. In one embodiment, an insulative material is mixed with a radiation absorbent material to create a first mixture. This first mixture can then be mixed with other components such as a scattering material or a fibrous material to create the insulative mixture. In another embodiment, an insulative material, a radiation absorbent material and other components such as a scattering material and/or a fibrous material can be mixed simultaneously to create the insulative mixture.

In accordance with the method of the present invention, the electromagnetic radiation can be any type of electromagnetic radiation that facilitates heating of the radiation absorbent material and drying of the insulative mixture, such as infrared radiation, particularly far infrared radiation, microwave radiation and radio waves. According to one embodiment, the electromagnetic radiation has a frequency of from about 0.5 GHz to about 20 GHz. Particularly preferred according to one embodiment of the present invention is microwave radiation, and for the purposes of illustration the following description refers to the use of microwave radiation to describe the present invention, although the present invention is not limited thereto.

Microwave radiation is applied to the insulative mixture, thereby heating and drying the insulative mixture. Microwave radiation can be applied in any known manner that results in heating of the insulative mixture. Preferably, the microwave radiation is applied to rapidly heat the insulative mixture without exceeding the softening point and/or melting temperature of the materials utilized in the insulative mixture. Moreover, the microwave radiation can be applied batch-wise in a sealed microwave or continuously in a conveyor microwave with proper precautions for control of microwave release. While the microwave radiation is applied, it can be advantageous to use a small purge stream of air or other gas to remove water vapor and other fluids that have been purged from the insulative mixture.

Applying microwave radiation to the insulative mixture can result in greatly increased heating rates and corresponding decreased drying times relative to convection drying techniques, particularly due to the presence of the radiation absorbent material in the mixture. In one embodiment, the microwave radiation is applied to the insulative mixture for a period of time sufficient to heat the insulative mixture to a temperature of at least about 50°C, and more preferably at least about 100°C. As noted above, the microwave radiation should be applied such that the temperature of the insulative mixture does not exceed the softening point or melting point of any of the components of the insulative mixture. For example, the microwave radiation can be applied to an insulative mixture for a period of time sufficient to heat the insulative mixture to a temperature of at least about 100°C, but not greater than about 250°C, and preferably not greater than about 200°C. In one embodiment, the microwave radiation is applied to an insulative mixture comprising silica and carbon black for a period of time sufficient to heat the insulative mixture to a temperature in the range of from at least about 100°C to not greater than about 150°C. It is an important aspect that a sufficient amount of water is removed from the insulative mixture by the application of the microwave radiation, and in one embodiment the microwave radiation is applied to the insulative mixture for a period of time sufficient to remove at least about 90% of the water contained in the insulative mixture.

Preferably, the insulative mixture reaches the desired temperature within a relatively short period of time after the start of the application of the microwave radiation. The amount of time required to heat the insulative mixture is a function of many variables, including the composition and shape of the insulative mixture and the power of the microwave radiation. Accordingly, the microwave radiation can be applied for not greater than about 20 minutes per 100 grams of insulative mixture, preferably not greater than about 10 minutes per 100 grams of insulative mixture, and more preferably not greater than about 5 minutes per 100 grams of insulative mixture to achieve the desired temperature. Typically, the microwave radiation will be applied for at least about 30 seconds per 100 grams of insulative mixture

Correspondingly, the microwave radiation also facilitates relatively high mass and volumetric heating rates. In one embodiment of the present invention, applying the microwave radiation facilitates a mass heating rate of at least about 0.005°C per sec per gram of insulative mixture, more preferably at least about 0.01 °C per sec per gram of insulative mixture, even more preferably at least about 0.015°C per sec per gram of insulative mixture, and even more preferably at least about 0.02°C per sec per gram of insulative mixture. In a related embodiment, applying the microwave radiation facilitates a volumetric heating rate of at least about 0.001°C per second per cm³ of insulative material, more preferably at least about 0.002°C per second per cm³ of insulative mixture, even more preferably at least about 0.003°C per second per cm³ of insulative mixture, and even more preferably at least about 0.004°C per second per cm³ of insulative mixture.

Another unexpected advantage according to the present invention is the difference in temperature that can be obtained between internal portions of the insulative mixture and surface portions of the insulative mixture. It has been found that the internal portions of the insulative mixture generally are hotter than the surface portions of the insulative mixture. That is, a temperature gradient is formed in the insulative mixture with the temperature decreasing from the interior portion to the surface of the mixture. While not wishing to be bound by theory, this is probably due to convection effects on the outer surface of the insulative mixture. Thus, while the insulative mixture is generally uniformly heated via application of the microwave radiation, an inside-out temperature gradient is created, which advantageously facilitates heating and drying of the insulative mixture. More particularly, since the internal surfaces of the insulative mixture are generally at a higher temperature than the surface portions of the insulative mixture, moisture and other fluids contained within the insulative mixture are more likely to flow with the temperature gradient out of the insulative mixture, thereby facilitating drying of the insulative mixture. This is a significant advantage over conventional convection dryers, which typically heat materials from the outside-in, and thereby require significantly longer heating times and do not realize the fluid removal efficiencies from an inside-out temperature profile. Thus, according to one embodiment of the present invention, an internal portion of the insulative mixture is at a higher temperature than a surface portion of the insulative mixture. In a particular embodiment, a temperature of the internal portion of the insulative mixture is greater than the temperature of any surface portion of the insulative mixture.

As noted, the insulative mixture is sealed in an enclosure to facilitate production of a vacuum insulation product. In this regard, the method may include the step of placing the insulative mixture within the enclosure before or after application of microwave radiation, but before sealing the insulative mixture. Generally, it is preferred to place the insulative mixture within the enclosure after the application of microwave radiation since most gas-impermeable enclosures will interfere with the application of the microwave radiation. Any suitable gas-impermeable enclosure can be employed, such as plastic laminates, metallized plastics, metals, metal-foils, and electroplated metals. The type and shape of enclosure is generally related to the application in which the vacuum insulation product is utilized. For example, in shipping applications it may be desirable to utilize thin, panel-shaped enclosures comprising a metallized plastic, such as metallized polyethylene terephthalate (PET). Also, the sealing step can be accomplished in any known manner suitable to the type of enclosure employed. For example, heat sealing can be used for plastic laminate enclosures and welding can be used for metal enclosures.

The method can also include the step of evacuating the insulative mixture and the enclosure to reduce the pressure within the enclosure containing the insulative mixture to below atmospheric pressure, such as by using a vacuum pump. In this regard, various known devices can be used to evacuate the enclosure. For example, evacuation units available from MULTIVAC, INC. (Kansas City, Missouri, U.S.A.) can be used. A reduced pressure will further enhance the insulating properties of the insulation product. Preferably, after the sealing step, the pressure within the vacuum insulation product is significantly reduced relative to atmospheric pressure. In this regard, the pressure within the product is preferably not greater than about 100 millibars, more preferably not greater than 10 millibars, and even more preferably not greater than 5 millibars.

According to the present invention, further efficiencies may be realized by sealing the enclosure while the insulative mixture is at an elevated temperature above ambient temperature. More particularly, it is an advantage that the enclosure can be more readily evacuated due to the presence of an increased kinetic energy, thereby reducing the time necessary to reduce the pressure within the enclosure to a desired level. Moreover, when the enclosure is sealed while the insulative mixture is at an elevated temperature, any fluids remaining within the enclosure after the sealing step will contribute to an even greater vacuum within the enclosure upon cooling. More particularly, as the fluids contained within the enclosure cool, their kinetic energy will drop thereby decreasing the pressure within the enclosure. Thus, according to one embodiment of the present invention, during or concomitant with the sealing step, the insulative mixture has a temperature that is elevated relative to room temperature. For example, the temperature of the insulative mixture can be at least about 50°C, and more preferably at least about 100°C during the sealing step. However, the elevated temperature is also preferably not so hot as to compromise the structural integrity of the enclosure. Thus, the elevated temperature is preferably not greater than 250°C, and more preferably not greater than 200°C, such as not greater than about 150°C.

The present invention contemplates new methods of producing vacuum insulation products that have significant advantages over prior conventional drying methods. The resulting vacuum insulation products may be used in a variety of applications, such as in the insulation of pipes, electronics, energy sources, apparel, shipping containers, appliances, and other uses for which high thermal efficiency and/or space savings is desirable. The vacuum insulation product can be produced in any suitable shape, size, form and/or arrangement, as desired for the application to which it will be applied.

### EXAMPLE

Eight samples of vacuum insulation panels having approximate dimensions of 140 mm x 120 mm x 25 mm are fabricated. The insulative mixture includes about 88 wt.% nanoporous silica, 10 wt.% carbon and 2 wt. % polyethylene fibers. The insulative mixture is dried in a 700 W batch microwave for various time periods and the maximum surface temperature is measured. In all cases, except the case where no microwaves are applied, the maximum surface temperature is reached approximately 2 minutes after removal from the microwave radiation. After the temperature is measured, the samples are immediately placed in an enclosure made of three layers of metallized PET (polyethylene terephthalate) and one polyethylene heat seal layer (available from Wipak, Walsrode, Germany). The enclosures containing the insulative mixture are evacuated for two minutes in a Multivac chamber machine and then heat sealed to form a vacuum panel. The pressure in the vacuum panels is measured the next day after they have cooled by measuring their deflection in a vacuum chamber.

As is illustrated in Table 1, exposure of the insulative mixture to microwave radiation, even for short periods of time, increases the temperature of the insulative mixture and decreases the final pressure of the vacuum insulation panels, leading to improved insulative properties.

**Table 1**

| **Sample #** | **Time in microwave** (seconds) | **Maximum surface temp.** (°C) | **Pressure** (mbar) |
|---|---|---|---|
| 1 | 0 | 18 | 27 |
| 2 | 30 | 73 | 13 |
| 3 | 60 | 94 | <10 |
| 4 | 90 | 123 | <10 |
| 5 | 120 | 142 | <10 |
| 6 | 150 | 205 | <5 |
| 7 | 180 | 223 | <5 |
| 8 | 210 | 215 | <5 |

As will be appreciated, the embodiments described above are for exemplary purposes only and are not intended to limit the scope of the present invention. Various adaptations, modifications and extensions of the described method will be apparent to those skilled in the art and are intended to be within the scope of the invention.

## Claims

1. A method for making a vacuum insulation product, the method comprising the steps of:
providing an insulative mixture comprising an insulative material and a radiation absorbent material;
least partially drying the insulative mixture; and
sealing said insulative mixture in an enclosure to form a vacuum insulation product;
**characterized in that** the drying step includes applying electromagnetic radiation to said insulative mixture.

2. The method as recited in Claim 1, wherein said providing step comprises mixing said insulative material and said radiation absorbent material to form a substantially uniform mixture.

3. The method as recited in any of the previous claims, wherein said radiation absorbent material comprises carbon.

4. The method as recited in any of the previous claims, wherein said radiation absorbent material comprises carbon black.

5. The method as recited in any of the previous claims, wherein said insulative material comprises silica.

6. The method as recited in any of the previous claims, wherein said insulative mixture comprises at least about 1 wt.% of said radiation absorbent material.

7. The method as recited in any of the previous claims, wherein said insulative mixture comprises at least about 5 wt.% of said radiation absorbent material.

8. The method as recited in any of the previous claims, wherein said insulative mixture further comprises a fibrous polymer material.

9. The method as recited in Claim 8, wherein said insulative mixture comprises at least about 0.1 wt.% and not greater than about 5 wt.% of said fibrous polymer material.

10. The method as recited in any of the previous claims, wherein said insulative mixture further comprises an infrared radiation scattering material.

11. The method as recited in any of the previous claims, wherein said step of applying electromagnetic radiation comprises applying microwave radiation.

12. The method as recited in any of the previous claims, wherein said step of applying electromagnetic radiation comprises applying radiation at a frequency of from about 0.5 GHz to about 20 GHz.

13. The method as recited in any of the previous claims, wherein said electromagnetic radiation is applied for a period of time sufficient to heat said insulative mixture to a temperature of at least about 50°C.

14. The method as recited in any of the previous claims, wherein said step of applying electromagnetic radiation comprises applying electromagnetic radiation for not greater than about 5 minutes per 100 grams of insulative mixture.

15. The method as recited in any of the previous claims, further comprising the step of:
prior to said sealing step, evacuating said enclosure.

16. The method as recited in Claim 15, wherein the internal pressure within said vacuum insulation product is not greater than about 100 millibars.

17. The method as recited in Claim 15, wherein the internal pressure within said vacuum insulation product is not greater than about 10 millibars.

18. The method as recited in any of the previous claims, wherein during said sealing step, the temperature of said insulative mixture is at least about 50°C.

## Patentansprüche

1. Verfahren zum Herstellen eines Vakuumisolierungsprodukts, wobei das Verfahren die Schritte umfasst:
Bereitstellen eines isolierenden Gemisches, umfassend ein isolierendes Material und ein Strahlung absorbierendes Material;
wenigstens teilweises Trocknen des isolierenden Gemisches; und
Versiegeln des isolierenden Gemisches in einer Hülle, um ein Vakuumisolierungsprodukt zu bilden;
**dadurch gekennzeichnet, dass** der Schritt des Trocknens Anwenden elektromagnetischer Strahlung auf das isolierende Gemisch umfasst.

2. Verfahren nach Anspruch 1, wobei der Schritt des Bereitstellens Mischen des isolierenden Materials und des Strahlung absorbierenden Materials, um ein im Wesentlichen gleichmäßiges Gemisch zu bilden, umfasst.

3. Verfahren nach einem der vorhergehenden Ansprüche, wobei das Strahlung absorbierende Material Kohlenstoff umfasst.

4. Verfahren nach einem der vorhergehenden Ansprüche, wobei das Strahlung absorbierende Material Kohlenstoffschwarz umfasst.

5. Verfahren nach einem der vorhergehenden Ansprüche, wobei das isolierende Material Siliziumoxid umfasst.

6. Verfahren nach einem der vorhergehenden Ansprüche, wobei das isolierende Gemisch wenigstens etwa 1 Gew.% des Strahlung absorbierenden Materials umfasst.

7. Verfahren nach einem der vorhergehenden Ansprüche, wobei das isolierende Gemisch wenigstens etwa 5 Gew.% des Strahlung absorbierenden Materials umfasst.

8. Verfahren nach einem der vorhergehenden Ansprüche, wobei das isolierende Gemisch ferner ein Polymerfasermaterial umfasst.

9. Verfahren nach Anspruch 8, wobei das isolierende Gemisch wenigstens etwa 0,1 Gew.% und nicht mehr als etwa 5 Gew.% des Polymerfasermaterials umfasst.

10. Verfahren nach einem der vorhergehenden Ansprüche, wobei das isolierende Gemisch ferner ein Infrarotstrahlung streuendes Material umfasst.

11. Verfahren nach einem der vorhergehenden Ansprüche, wobei der Schritt des Anwendens elektromagnetischer Strahlung Anwenden von Mikrowellenstrahlung umfasst.

12. Verfahren nach einem der vorhergehenden Ansprüche, wobei der Schritt des Anwendens elektromagnetischer Strahlung Anwenden von Strahlung mit einer Frequenz von etwa 0,5 GHz bis etwa 20 GHz umfasst.

13. Verfahren nach einem der vorhergehenden Ansprüche, wobei die elektromagnetische Strahlung über einen Zeitraum angewendet wird, welcher ausreicht, um das isolierende Gemisch auf eine Temperatur von wenigstens 50 °C zu erwärmen.

14. Verfahren nach einem der vorhergehenden Ansprüche, wobei der Schritt des Anwendens elektromagnetischer Strahlung Anwenden elektromagnetischer Strahlung nicht länger als etwa 5 Minuten pro 100 Gramm isolierenden Gemisches umfasst.

15. Verfahren nach einem der vorhergehenden Ansprüche, ferner umfassend den Schritt:
vor dem Schritt des Versiegelns, Evakuieren der Hülle.

16. Verfahren nach Anspruch 15, wobei der innere Druck innerhalb des Vakuumisolierungsprodukts nicht größer ist als etwa 100 Millibar.

17. Verfahren nach Anspruch 15, wobei der innere Druck innerhalb des Vakuumisolierungsprodukts nicht größer ist als etwa 10 Millibar.

18. Verfahren nach einem der vorhergehenden Ansprüche, wobei, während des Schritts des Versiegelns, die Temperatur des isolierenden Gemisches wenigstens etwa 50 °C beträgt.

## Revendications

1. Procédé pour la fabrication d'un produit d'isolation sous vide, le procédé comprenant les étapes consistant :
à fournir un mélange isolant comprenant un matériau isolant ainsi qu'un matériau absorbant un rayonnement ;
à sécher au moins partiellement le mélange isolant ; et
à sceller ledit mélange isolant dans une enceinte pour former un produit d'isolation sous vide ;
**caractérisé en ce que** l'étape de séchage comprend l'application d'un rayonnement électromagnétique audit mélange isolant.

2. Le procédé selon la revendication 1, dans lequel ladite étape de fourniture comprend le mélange dudit matériau isolant et dudit matériau absorbant un rayonnement afin de former un mélange sensiblement uniforme.

3. Le mélange selon l'une quelconque des revendications précédentes, dans lequel ledit matériau absorbant un rayonnement comprend du carbone.

4. Le procédé selon l'une quelconque des revendications précédentes, dans lequel ledit matériau absorbant un rayonnement comprend du noir de carbone.

5. Le procédé selon l'une quelconque des revendications précédentes, dans lequel ledit matériau isolant comprend de la silice.

6. Le procédé selon l'une quelconque des revendications précédentes, dans lequel ledit mélange isolant comprend au moins environ 1 % en poids dudit matériau absorbant un rayonnement.

7. Le procédé selon l'une quelconque des revendications précédentes, dans lequel ledit mélange isolant comprend au moins environ 5 % en poids dudit matériau absorbant un rayonnement.

8. Le procédé selon l'une quelconque des revendications précédentes, dans lequel ledit mélange isolant comprend en outre un matériau polymère fibreux.

9. Le procédé selon la revendication 8, dans lequel ledit mélange isolant comprend au moins environ 0,1 % en poids et pas supérieur à environ 5 % en poids dudit matériau polymère fibreux.

10. Le procédé selon l'une quelconque des revendications précédentes, dans lequel ledit mélange isolant comprend en outre un matériau de diffusion d'un rayonnement infrarouge.

11. Le procédé selon l'une quelconque des revendications précédentes, dans lequel l'étape consistant à appliquer un rayonnement électromagnétique comprend l'application d'un rayonnement micro-ondes.

12. Le procédé selon l'une quelconque des revendications précédentes, dans lequel l'étape consistant à appliquer un rayonnement électromagnétique comprend l'application du rayonnement à une fréquence d'environ 0,5 GHz à environ 20 GHz.

13. Le procédé selon l'une quelconque des revendications précédentes, dans lequel ledit rayonnement électromagnétique est appliqué pendant une durée suffisante pour chauffer ledit mélange isolant à une température d'au moins environ 50°C.

14. Le procédé selon l'une quelconque des revendications précédentes, dans lequel ladite étape consistant à appliquer un rayonnement électromagnétique comprend l'application du rayonnement électromagnétique pendant une durée non supérieure à environ 5 minutes pour 100 grammes de mélange isolant.

15. Le procédé selon l'une quelconque des revendications précédentes, comprenant en outre les étapes consistantes :
avant ladite étape de scellement, à évacuer ladite enceinte.

16. Le procédé selon la revendication 15, dans lequel la pression interne régnant au sein dudit produit d'isolement sous vide n'est pas supérieure à environ 100 millibars.

17. Le procédé selon la revendication 15, dans lequel la pression interne régnant au sein dudit produit d'isolation sous vide n'est pas supérieure à environ 10 millibars.

18. Le procédé selon l'une quelconque des revendications précédentes, dans lequel, pendant ladite étape de scellement, la température dudit mélange isolant et d'au moins environ 50°C.
